# EUROPÄISCHE PATENTSCHRIFT

(11) **EP 1 108 101 B1**
(45) Veröffentlichungstag und Bekanntmachung des Hinweises auf die Patenterteilung: **21.09.2005**
(21) Anmeldenummer: 99948701.0
(22) Anmeldetag: 27.07.1999
(51) Int. Cl.: E05B 49/00

(54) **ZUGANGS- UND START/FAHRBERECHTIGUNGSSYSTEM FÜR EIN KRAFTFAHRZEUG**
ACCESS AND START/DRIVE AUTHORIZATION SYSTEM FOR A MOTOR VEHICLE
SYSTEME DONNANT L'AUTORISATION D'ACCEDER ET DE DEMARRER/FAIRE ROULER UNE AUTOMOBILE

(30) Priorität: 29.08.1998 DE 19839478
(43) Veröffentlichungstag der Anmeldung: 20.06.2001
(73) Patentinhaber: ROBERT BOSCH GMBH, 70442 Stuttgart (DE)
(72) Erfinder: WEISS, Karl-Ernst, D-76275 Ettlingen (DE); DIEBOLD, Bernd, D-77866 Rheinau (DE)
(86) Internationale Anmeldenummer: PCT/DE1999/002299
(87) Internationale Veröffentlichungsnummer: WO 2000/012845

(56) Entgegenhaltungen:
- EP-A- 0 659 963
- EP-A- 0 767 286
- EP-A- 0 848 123
- DE-A- 4 300 600
- DE-A- 4 329 697
- DE-A- 4 435 894

## Beschreibung

### Stand der Technik

Die Erfindung betrifft ein Zugangs- und Start/Fahrberechtigungssystem für ein Kraftfahrzeug mit einem tragbaren Transponder und einem im Kraftfahrzeug untergebrachten Steuergerät, die beide in Frage-Antwort-Dialogen mittels aufeinander abgestimmter Codeinformationen den Zugang zum Kraftfahrzeug, den Start und die Fahrt des Kraftfahrzeugs freigeben oder sperren.

Derartige Berechtigungssysteme sind in den verschiedensten Ausgestaltungen von Transponder und Steuergerät auf der Basis unterschiedlicher Übertragungsverfahren bekannt. Dabei arbeitet der Transponder einmal rein induktiv über kurze Distanz und zum anderen mittels elektromagentischer Wellen (Funk) über größere Reichweiten.

Aus der DE-A-43 29 697 ist eine Zugangskontrolleinrichtung bekannt, die eine Sende- und Empfangseinheit und einen tragbaren Transponder in Form einer Chipkarte aufweist. Um ein Kraftfahrzeug zu entriegeln, findet ein Frage-Antwort-Dialog zwischen der Sende- und Empfangseinheit und dem Transponder statt. Damit die Einrichtung auch bei auftretenden Störungen, wie einem starken Störsender, zuverlässig funktioniert, kann der Transponder das Antwortcodesignal auf verschiedene Arten übertragen. Ebenso kann die Sende- und Empfangseinheit in ihrer Empfangsempfindlichkeit verändert werden.

Aus der EP-A-767 286 ist weiterhin ein fernsteuerbares Zugangs- und Fahrberechtigungssystem für Kraftfahrzeuge bekannt, bei dem ein elektronischer Schlüssel auf zwei verschiedenen Frequenzen übertragen kann. Dabei wird auf einer hohen Frequenz zur Erlangung der Zugangsberechtigung gesendet, während eine niedrige Frequenz zum bidirektional Austausch von Daten zwischen dem Schlüssel und dem Kraftfahrzeug über eine geringe Distanz zur Erlangung der Fahrberechtigung dient, falls der Schlüssel in ein Zündschloss eingebracht wurde.

Es entstehen jedoch Schwierigkeiten bei der exakten und räumlich begrenzten Lokalisierung des Transponders z.B. dann, wenn ein Abfrage stattfindet, ob der Transponder sich im Innenraum des Kraftfahrzeuges oder außerhalb des Kraftfahrzeuges befindet. Insbesondere bei der konstengünstigen und platzsparenden Gestaltung der für die weiterreichende Übertragung der Signale erforderlichen Empfangsantenne, z.B. als Rundempfangsantenne, ist die örtliche Zuordnung des Transponders schwierig. Nachteilig ist auch, wenn zum Starten des Kraftfahrzeuges der Transponder in ein Ablagefach im Innenraum des Kraftfahrzeuges abgelegt werden muß. Dann stört der leistungsstarke, nur für den Zugang erforderliche Funk-Übertragungskanal (z.B. UHF-Sender) die mit nur geringer Feldstärke arbeitende Kommunikation zwischen dem Steuergerät und dem in dem Ablagefach befindlichen Transponder, so daß aufwendige Filter, Abschirmungen und dgl. erforderlich werden.

Besonders problematisch ist die Nutzung des leistungsstarken Übertragungskanals bei Start-/Fahrberechtigungssystemen, bei denen der Transponder nicht in einer Ablage, sondern lediglich in einer oder mehreren vorgegebenen Zonen im Fahrzeuginneren sein muß. Eine solche Zone könnte etwa der Fahrersitz und eine bestimmte Umgebung dessen sein. Ohne Angabe der Art des Frage-Antwort-Dialogs und einer entsprechenden Auswahl des Übertragungskanals gestaltet sich eine zuverlässige Lokalisierung des Transponders zumindest aufwendig.

Es ist Aufgabe der Erfindung, ein Zugangs- und Start/Fahrberechtigungssystem der eingangs erwähnten Art so zu verbessern, daß sich die beiden Berechtigungssysteme ohne Mehraufwand an Filter- und Abschirmmaßnahmen nicht gegenseitig stören. Weiterhin soll die Transponder-Energiequelle so wenig wie möglich/nötig beansprucht werden, um Austauschkosten zu reduzieren.

Diese Aufgabe wird nach der Erfindung dadurch gelöst, daß den vom Steuergerät ausgesandten Fragesignalen eine Zusatzinformation beigegeben ist, die die Art der Berechtigungsüberprüfung - Zugangsberechtigung oder Start/Fahrberechtigung - kennzeichnet und dass der Transponder in Abhängigkeit von dieser Zusatzinformation für den Zugangs-Frage-Antwort-Dialog einen induktiven Übertragungskanal und einen leistungsstärkeren Übertragungskanal sowie für den Start/Fahr-Frage-Antwort-Dialog nur den induktiven Übertragungskanal verwendet. Damit das Steuergerät die erforderlichen Zusatzinformationen dem Fragesignal zuordnen kann, ist das Steuergerät mittels unterschiedlicher Einleitungssignale ansteuerbar, die die Art der durchzuführenden Berechtigungsprüfung kennzeichnen. Mittels der Zusatzinformation wird dem Transponder mitgeteilt, welche Art von Berechtigungsprüfung ablaufen wird. Danach wird das für diese Berechtigungsprüfung optimale Übertragungsverfahren gewählt, das gerade bei der Zugangsberechtigung durch beide Übertragungskanäle eine große Reichweite garantiert und bei der Start/Fahrberechtigung das Arbeiten mit geringer Feldstärke über kurze Distanzen erlaubt. Bei der Zugangsberechtigung werden aus Sicherheitsgründen sowohl der induktive als auch der leistungsstärkere Übertragungskanal (UHF oder Infrarot) gleichzeitig benützt. Dadurch ist es mögtich, auch bei nicht funktionsfähigem Übertragungskanal mit großer Leistung, etwa bei Ausfall der Transponder-Stromversorgung, eine Notzugangsmöglichkeit zum Kraftfahrzeug mit eingeschränkter Reichweite zu schaffen.

Bei der Start-/Fahrberechtigungsüberprüfung lässt sich zudem aufgrund der geringen Reichweite bzw. geringen Feldstärke der induktiv gesendeten Antwort des Transponders eine eindeutige Lokalisierung des Transponders erreichen. Es ist daher leicht zu unterscheiden, ob der Transponder sich im Innenraum des Kraftfahrzeugs oder außerhalb des Kraftfahrzeugs befindet. Dazu lassen sich dann die erforderlichen Antennen mit geeigneter Abstrahl- bzw. Emfpangscharakteristik einsetzen. Durch gezielte Auswahl des Übertragungskanals kann zudem die Energiequelle des Transponders geschont werden, unabhängig von einer Funk- oder IR- bzw. Ultraschallübertragung. Die Lebensdauer wird erhöht und die Energiequelle braucht nicht so oft ausgetauscht zu werden. Außerdem wird bei Funkübertragung die elektromagnetische Strahlung (Elektrosmog) im Kraftfahzeug-Innenraum verringert. Durch die induktive Übertragung über kurze Entfernungen wird weiterhin die Sicherheit gegen Abhören verbessert. Dies gilt insbesondere dann, wenn der Transponder in einem Ablagefach abgelegt ist.

In einer vorteilhaften Ausgestaltung kann das Einleitungssignal für die Zugangsberechtigung durch eine manuelle Schaltmaßnahme am Kraftfahrzeug oder eine Schaltmaßnahme am Transponder auslösbar sein, während das Einleitungssignal für die Start/Fahrberechtigung durch eine manuelle Schaltmaßnahme im Innenraum des Kraftfahrzeuges oder automatisch durch Ablegen des Transponders in einem Aufnahmefach im Innenraum des Kraftfahrzeuges auslösbar ist. Vorteilhaft ist auch eine automatische Auslösung durch Erkennen der Fahrersitzbelegung.

Für die Durchführung der Frage-Antwort-Dialoge ist zudem vorgesehen, dass das Steuergerät über einen Sendekanal oder mehrere Sendekanäle mit dem Transponder verbindbar ist, der (die) für induktive und drahtlose Funkübertragung der Fragesignale für den Zugangs-Frage-Antwort-Dialog und den Start/Fahrberechtigungs-Frage-Antwort-Dialog sowie für die Zusatzinformationen verwendbar ist (sind). Das Steuergerät gibt in Abhängigkeit von dem aufgenommenen Einleitungssignal dem Fragesignal des zugeordneten Frage-Antwort-Dialoges die zugeordnete Zusatzinformation bei.

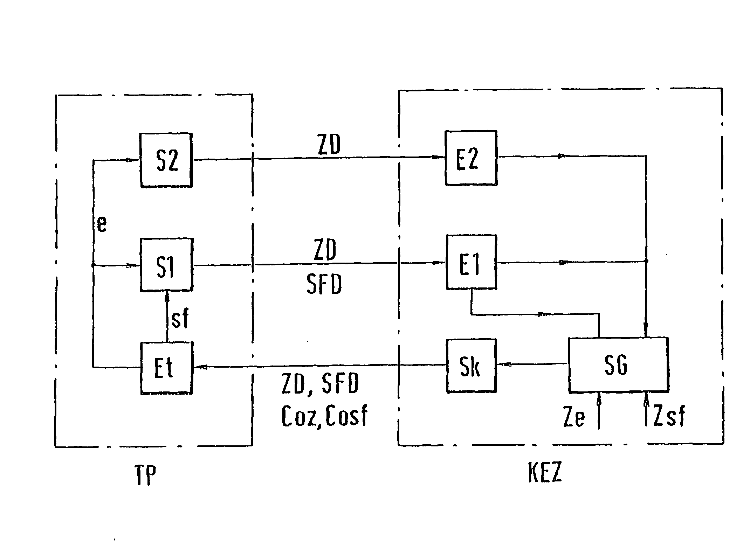

Die Erfindung wird anhand eines in der Zeichnung als Blockschaltbild dargestellten Ausführungsbeispiels näher erläutert.

In der Zeichnung sind die Sende- und Empfangseinrichtungen des tragbaren Transponders TP und des Kraftfahrzeuges KFZ dargestellt, die für das Zugangs- und Start/Fahrberechtigungssystem nach der Erfindung erforderlich sind.

Im Kraftfahrzeug KFZ ist ein Steuergerät SG untergebracht, dem die Einleitungssignal Ze und Zsf zuführbar sind. Das Einleitungssignal Ze ist der Zugangsberechtigungsprüfung zugeordnet und kann durch eine manuelle Schaltmaßnahme am Kraftfahrzeug KFZ, z.B. Betätigen eines Türgriffes, ausgelöst werden. Auch eine Schaltmaßnahme am Transponder TP kann über die Empfangseinrichtung E2 ein Einleitungssignal Ze am Steuergerät SG bewirken. Außerdem kann ein zusätzlicher Näherungsschalter des Kraftfahrzeuges den Zugang-Frage-Antwort-Dialog ZD mit einem Einleitungssignal Ze einleiten.

Der Transponder TP weist eine Sendeeinrichtung S1 auf, die Bestandteil eines induktiven Übertragungskanals mit der Empfangseinrichtung E1 des Kraftfahrzeuges ist. Dem Transponder TP ist auch ein leistungsstarker Übertragungskanal mit der Sendeeinrichtung S2 zugeordnet, der mit der Empfangseinrichtung E2 im Kraftfahrzeug KFZ vervollständigt ist.

Erhält das Steuergerät SG das Einteitungssignal Ze, dann ist dies das Kennzeichen für eine Zugangsberechtigungsüberprüfung. Dem Fragesignal des Zugangs-Frage-Antwort-Dialoges ZD wird eine Zusatzinformation Coz beigegeben, das der Empfangseinrichtung Et des Transponders TP damit die Art der für die Antwortsignale vorgesehenen Übertragungskanäle mitteilt. Die Antwortsignale des Zugangs-Frage-Antwort-Dialoges ZD werden sowohl über den induktiven Übertragungskanal S1-E1 als auch über den leistungsstarken Übertraguangskanal S2-E2 zum Steuergerät SG gelangen. Die Verbindung e zeigt die gleichzeitige Ansteuerung der Sendeeinrichtungen S1 und S2 des Transponders TP an. Auch die Emp-fangseinrichtungen E1 und E2 im Kraftfahrzeug KFZ steuern das Steuergerät SG gleichzeitig an. Ist der Zugangs-Frage-Antwort-Dialog ZD erfolgreich verlaufen, dann wird die Verriegelung des Kraftfahrzeuges KFZ in bekannter Weise aufgehoben.

Nimmt der Fahrer auf dem Fahrersitz des Kraftfahrzeuges Platz und bringt den Transponder TP in ein dafür vorgesehenes Ablagefach, dann wird das Einleitungssignal Zsf ausgelöst und dieses zeigt dem Steuergerät SG an, daß ein Start/Fahrberechtigungs-Frage-Antwort-Dialog SFD durchzuführen ist. Dem Fragesignal von der Steuereinrichtung Sk des Kraftfahrzeuges KFZ wird eine andere Zusatzinformation Cosf beigegeben, die nach dem Empfang durch die Empfangseinrichtung EZ des Transponders TP als Kennzeichen für die Start/-Fahrberechtigungsüberprüfung dient. Mit der Steuerleitung sf ist angedeutet, daß in diesem Fall für die Antwortsignale des Start/Fahrberechtigungs-Frage-Antwort-Dialoges SFD nur der induktive Übertragungskanal S1-E1 mit geringer Feldstärke und kleiner Reichweite gewählt wird. Im Kraftfahrzeug KFZ steuert daher auch nur die Empfangseinrichtung E1 das Steuergerät SG. Auch die Fragesignale von dem Kraftfahrzeug KFZ zum Transponder TP, d.h. der Übertragungskanal Sk-Et, lassen sich in Abhängigkeit von den Einleitungssignalen Ze bzw. Zsf entsprechend unterschiedlich übertragen. So kann die Zugangsberechtigungsüberprüfung auf dem induktiven Übertragungskanal und dem leistungsstarken Übertragungskanal ablaufen, wenn die Sendeeinrichtung Sk und die Empfangseinrichtung Et auf beide Übertragungsverfahren ausgelegt sind. Beim Einleitungssignal Zsf für die Start/Fahrberechtigungsüberprüfung wird dann auch in der Richtung Kraftfahrzeug KFZ zum Transponder TP nur der induktive Übertragungskanal verwendet. Die Start-/Fahrberechtigungsüberprüfung kann auch auf andere als der hier beschriebenen Weise ausgelöst werden, z.B. Erkennung der Fahrersitzbelegung.

Der Transponder TP kann in Schlüssel, Chipkarten und dgl. eingebaut sein, wenn die dafür erforderlichen Leseeinrichtungen zur Verfügung stehen. Die Bezeichnung Transponder TP und Steuergerät SG gilt für alle an sich bekannten Berechtigungssysteme für Zugang zum Kraftfahrzeug und für Start- und Fahrtfreigabe des Kraftfahrzeuges KFZ.

## Patentansprüche

1. Zugangs- und Start/Fahrberechtigungssystem für ein Kraftfahrzeug (KFZ) mit einem tragbaren Transponder (TP) und einem im Kraftfahrzeug (KFZ) untergebrachten Steuergerät (SG), die beide in Frage-Antwort-Dialogen (ZD, SFD) mittels aufeinander abgestimmter Codeinformationen den Zugang zum Kraftfahrzeug (KFZ), den Start und die Fahrt des Kraftfahrzeugs (KFZ) freigeben oder sperren, wobei den vom Steuergerät (SG) ausgesandten Fragesignalen eine Zusatzinformation (Coz, Cosf) beigegeben ist, die die Art der Berechtigungsüberprüfung - Zugangsberechtigung oder Start/Fahrberechtigung - kennzeichnet und der Transponder (TP) in Abhängigkeit von dieser Zusatzinformation (Coz, Cosf) für den Zugangs-Frage-Antwort-Dialog (ZD) einen induktiven Übertragungskanal (S1-E1) und einen leistungsstärkeren Übertragungskanal (S2-E2) sowie für den Start/Fahrberechtigungs-Frage-Antwort-Dialog (SFD) nur den induktiven Übertragungskanal (S1-E1) verwendet,
**dadurch gekennzeichnet, dass** das Steuergerät (SG) mittels unterschiedlicher Einleitungssignale (Ze, Zsf) ansteuerbar ist, die die Art der durchzuführenden Berechtigungsüberprüfung kennzeichnen, wobei das Steuergerät (SG) in Abhängigkeit von dem aufgenommenen Einleitungssignal (Ze, Zsf) die zugeordnete Zusatzinformation (Coz, Cosf) dem Fragesignal des zugeordneten Frage-Antwort-Dialogs (ZD, SFD) beigibt und dass aufgrund einer geringen Reichweite bzw. geringen Feldstärke der über den induktiven Übertragungskanal (S1-E1) gesendeten Antwort des Transponders (TP) eine eindeutige Lokalisierung des Transponders (TP) erreichbar ist.

2. Zugangs- und Start/Fahrberechtigungssystem nach Anspruch 1,
**dadurch gekennzeichnet,**
**daß** das Einleitungssignal (Ze) für die Zugangsberechtigung durch eine manuelle Schaltmaßnahme am Kraftfahrzeug (KFZ) oder eine Schaltmaßnahme am Transponder (TP) auslösbar ist.

3. Zugangs- und Start/Fahrberechtigungssystem nach Anspruch 1,
**dadurch gekennzeichnet,**
**daß** das Einleitungssignal (Ze) für die Zugangsberechtigung durch eine Vorrichtung am Fahrzeug ausgelöst wird, die das Sich-Nähern und den Zugangswunsch einer Person selbsttätig erkennt.

4. Zugangs- und Start/Fahrberechtigungssystem nach Anspruch 1,
**dadurch gekennzeichnet,**
**daß** das Einleitungssignal (Zsf) für die Start/Fahrberechtigung durch eine manuelle Schaltmaßnahme im Innenraum des Kraftfahrzeuges (KFZ) oder eine durch Ablegen des Transponders (TP) in einem Aufnahmefach im Innenraum des Kraftfahrzeuges (KFZ) auslösbar ist.

5. Zugangs- und Start-/Fahrberechtigungssystem nach Anspruch 1,
**dadurch gekennzeichnet,**
**daß** das Einleitungssignl (Zsf) für die Start/Fahrberechtigung durch automatisches Erkennen der Anwesenheit eines Transponders in einer vorgebbaren Zone des Fahrzeug-Innenraumes auslösbar ist.

6. Zugangs- und Start-/Fahrberechtigungssystem nach Anspruch 1,
**dadurch gekennzeichnet,**
**daß** das Einleitungssignal (Zsf) für die Start-/Fahrberechtigung durch automatisches Erkennen der Belegung des Fahrersitzes durch eine Person auslösbar ist.

7. Zugangs- und Start/Fahrberechtigungssystem nach einem der Ansprüche 1 bis 6,
**dadurch gekennzeichnet,**
**daß** das Steuergerät (SG) über einen Sendekanal (Sk-Et) mit dem Transponder (TP) verbindbar ist, der für induktive und drahtlose Funlcübertragung der Fragesignale für den Zugangs-Frage-Antwort-Dialog (ZD) und den Start/Fahrberechtigungs-Frage-Antwort-Dialog (SFD) sowie für die Zusatzinfor-mationen (Coz, Cosf) verwendbar ist.

## Claims

1. Access and start/drive authorization system for a motor vehicle (KFZ) having a portable transponder (TP) and a controller (SG) (which is accommodated in the motor vehicle (KFZ)), both of which enable or inhibit access to the motor vehicle (KFZ), and enable or inhibit starting and driving of the motor vehicle (KFZ), using coordinated code information in question and answer dialogues (ZD, SFD), with additional information (Coz, Cosf) which indicates the type of authorization check - access authorization or start/drive authorization - being added to the question signals transmitted by the controller (SG), and the transponder (TP) using an inductive transmission channel (S1-E1) and a more powerful transmission channel (S2-E2) for the access question and answer dialogue (ZD), and using only the inductive transmission channel (S1-E1) for the start/drive authorization question and answer dialogue (SFD), as a function of this additional information (Coz, Cosf),
**characterized in that** different initiation signals (Ze, Zsf) which indicate the type of authorization check to be carried out can be used to drive the controller (SG), with the controller (SG) adding the associated additional information (Coz, Cosf) to the question signal in the associated question and answer dialogue (ZD, SFD) as a function of the initiation signal (Ze, Zsf) received, and **in that** it is possible to unambiguously locate the transponder (TP) on the basis of a short range or low field strength of the answer from the transponder (TP), which answer is transmitted over the inductive transmission channel (S1-E1).

2. Access and start/drive authorization system according to Claim 1,
**characterized in that**
the initiation signal (Ze) for access authorization can be triggered by a manual operating measure on the motor vehicle (KFZ) or an operating measure on the transponder (TP).

3. Access and start/drive authorization system according to Claim 1,
**characterized in that**
an apparatus which automatically detects that a person is approaching and wishes to gain access is used to trigger the initiation signal (Ze) for access authorization.

4. Access and start/drive authorization system according to Claim 1,
**characterized in that**
the initiation signal (Zsf) for start/drive authorization can be triggered by a manual operating measure in the interior of the motor vehicle (KFZ) or by placing the transponder (TP) in a holder in the interior of the motor vehicle (KFZ).

5. Access and start/drive authorization system according to Claim 1,
**characterized in that**
the initiation signal (Zsf) for start/drive authorization can be triggered by automatically detecting the presence of a transponder in a prescribable zone of the vehicle interior.

6. Access and start/drive authorization system according to Claim 1,
**characterized in that**
the initiation signal (Zsf) for start/drive authorization can be triggered by automatically detecting that the driver's seat is occupied by a person.

7. Access and start/drive authorization system according to one of Claims 1 to 6,
**characterized in that**
the controller (SG) can be connected to the transponder (TP) via a transmission channel (Sk-Et) which can be used for inductive and wire-free radio transmission of the question signals for the access question and answer dialogue (ZD) and the start/drive authorization question and answer dialogue (SFD) as well as for the additional information (Coz, Cosf).

## Revendications

1. Système d'autorisation d'accès et de démarrage/de roulement pour un véhicule automobile (KFZ) avec un transpondeur (TP) portable et un dispositif de commande (SG) installé dans le véhicule automobile (KFZ) qui tous les deux autorisent ou bloquent l'accès au véhicule automobile (KFZ), le démarrage et le roulement d'un véhicule automobile (KFZ) dans des dialogues questions-réponses (ZD, SFD) au moyen d'informations codées harmonisées, une information complémentaire (Coz, Cosf) étant ajoutée aux signaux d'interrogation envoyés par le dispositif de commande (SG) caractérisant le type de l'examen d'autorisation - autorisation d'accès ou autorisation de démarrage/de roulement - et le transpondeur (TP) utilise en fonction de cette information complémentaire (Coz, Cosf) un canal de transmission (S1-E1) inductif et un canal de transmission (S2-E2) plus puissant pour le dialogue questions-réponses d'accès (ZD) et utilise uniquement le canal de transmission (S1-E1) inductif pour le dialogue questions-réponses d'autorisation de démarrage/de roulement (SFD),
**caractérisé en ce que**
le dispositif de commande (SG) peut être commandé au moyen de signaux d'initialisation (Ze, Zsf) différents qui caractérisent le type de l'examen d'autorisation à réaliser, le dispositif de commande (SG) ajoute l'information complémentaire (Coz, Cosf) associée au signal d'interrogation du dialogue questions-réponses (ZD, SFD) associé en fonction du signal d'initialisation (Ze, Zsf) reçu, et en raison d'une portée ou d'une intensité de champ faible de la réponse du transpondeur (TP) envoyée sur le canal de transmission (S1-E1) inductif, on peut obtenir une localisation univoque du transpondeur (TP).

2. Système d'autorisation d'accès et de démarrage/de roulement selon la revendication 1,
**caractérisé en ce que**
le signal d'initialisation (Ze) pour l'autorisation d'accès peut être déclenché par une action de commutation manuelle sur le véhicule automobile (KFZ) ou par une action de commutation sur le transpondeur (TP).

3. Système d'autorisation d'accès et de démarrage/de roulement selon la revendication 1,
**caractérisé en ce que**
le signal d'initialisation (Ze) pour l'autorisation d'accès est déclenché par un dispositif sur le véhicule qui détecte automatiquement l'approche et le souhait d'accès d'une personne.

4. Système d'autorisation d'accès et de démarrage/de roulement selon la revendication 1,
**caractérisé en ce que**
le signal d'initialisation (Zsf) pour l'autorisation de démarrage/de roulement peut être déclenché par une action de commutation manuelle à l'intérieur du véhicule automobile (KFZ) ou par la disposition du transpondeur (TP) dans un compartiment de rangement à l'intérieur du véhicule automobile (KFZ).

5. Système d'autorisation d'accès et de démarrage/de roulement selon la revendication 1,
**caractérisé en ce que**
le signal d'initialisation (Zsf) pour l'autorisation de démarrage/de roulement peut être déclenché par une détection automatique de la présence d'un transpondeur dans une zone prédéterminée de l'intérieur du véhicule.

6. Système d'autorisation d'accès et de démarrage/de roulement selon la revendication 1,
**caractérisé en ce que**
le signal d'initialisation (Zsf) pour l'autorisation de démarrage/ de roulement peut être déclenché par une détection automatique de l'occupation du siège du conducteur par une personne.

7. Système d'autorisation d'accès et de démarrage/de roulement selon l'une quelconque des revendications 1 à 6,
**caractérisé en ce que**
le dispositif de commande (SG) peut être relié au transpondeur (TP) par un canal d'émission (Sk-Et) qui peut être utilisé pour la transmission radio inductive sans fil des signaux d'interrogation pour le dialogue questions-réponses d'accès (ZD) et pour le dialogue questions-réponses d'autorisation de démarrage/de roulement (SFD) ainsi que pour les informations complémentaires (Coz, Cosf).
